# EUROPEAN PATENT SPECIFICATION

(11) **EP 1 855 530 B1**
(45) Date of publication and mention of the grant of the patent: **13.08.2008**
(21) Application number: 06737917.2
(22) Date of filing: 09.03.2006
(51) Int. Cl.: A01N 43/16, A01N 43/42, A01N 25/08, A01P 17/00

(54) **COMPOSITIONS HAVING SUSTAINED-RELEASE INSECT REPELLENCY**
INSEKTENABWEISENDE ZUSAMMENSETZUNGEN MIT VERZÖGERTER FREISETZUNG
COMPOSITIONS INSECTIFUGES A LIBERATION PROLONGEE

(30) Priority: 09.03.2005 US 660368 P
(43) Date of publication of application: 21.11.2007
(73) Proprietor: E.I. DU PONT DE NEMOURS AND COMPANY, Wilmington DE 19898 (US)
(72) Inventor: SCIALDONE, Mark, A., West Grove, Pennsylvania 19390 (US)
(74) Representative: Towler, Philip Dean
(86) International application number: PCT/US2006/008787
(87) International publication number: WO 2006/096876

(56) References cited:
- US-A1- 2003 235 601
- US-B1- 6 524 605
- EISENBRAUN E J ET AL: "(4aS,7S,7aR)-Nepetalactam and (4aS,7S,7aR)-2-[(3R,4R,4aR,7S,7aR)-Octa hydro-4,7-dimethyl-1-oxocyclopenta[c]pyran -3-yl]nepetalactam: Nitrogen Analogues of Nepetalactone and Nepetalic psi-Anhydride" JOURNAL OF ORGANIC CHEMISTRY, AMERICAN CHEMICAL SOCIETY. EASTON, US, vol. 53, no. 17, 1988, pages 3968-3972, XP002332084 ISSN: 0022-3263

## Description

### Technical Field

The present invention pertains to compositions containing clay, particularly those compositions in which the clay is admixed with an insect repellant active ingredient. Such compositions provide sustained release of the insect repellant active to improve utilization thereof, thus avoiding the need for frequent renewal.

### Background

EP 548,940 is drawn to an insecticidal composition for the slow release of the insecticidal ingredients and a method for producing it. Disclosed is a composition comprising 60-99.9% by weight of a clay mineral having intercalated therein an organic ammonium complex, 0.1-26% of an insecticide, and 0.01-26% of an acid having a pKa of 1-9.5 at 25° C. A wide range of clays are said to be suitable. The organic ammonium complexes preferably combine at least one phenyl or benzyl group and an aliphatic group. A wide range of apparently commonly-known insecticides are employed. Both organic and inorganic acids are said to be suitable. It is said that the composition so-described may be employed as a slow-release composition. In the alternative, the composition so formulated may be combined with a so-called carrier to provide the final slow-release composition. Inorganic carriers are clays and other minerals.

Choudary et al, J. Agric. Food Chem. 37, 1422-1425 (1989), discloses pesticide-metal-montmorillonite complexes for the controlled release of pesticides. Disclosed is the encapsulation of pesticides via complexation with metals in the interlamellars of smectite clays. Complexes were prepared by refluxing a composition of metal-montmorillonite and the ligand in methanol. The metals actually employed are copper and cobalt. Phosphorous and carbamate ligands are employed.

JP 59-199,602 discloses an insect repellent composition comprising a component for repelling harmful insects and one or more fine powders selected from among minerals such as talc, kaolin, montmorillonite, china clay, bentonite, or diatomaceous earth; inorganic fine powders such as calcium carbonate, magnesium carbonate, calcium phosphate, titanium oxide, or barium sulfate; and organic fine powders such as starch, carboxymethyl cellulose, or lactose with the insect repelling substance in a cream, lotion, aerosol, or other formulation. The insect repellent includes *N,N*-diethyl meta toluamide (DEET), dimethyl phthalate, dibutyl phthalate, 2,3,4,5-*bis*(Δ₂-butylene)tetrahydrofurfural, di-*n*-propyl isocinchomeronate, or di-*m*-butyl succinate and other repelling components. Increased durability in the insect repelling effect is the result. Disclosed therein is reduced absorption by human skin of the applied repellent by virtue of complexation with the fine powder vehicle. The average particle size of the mineral, inorganic, or organic fine powders used in this reference is desirably 50µm or less. The fine powder is employed at 0.1-50% by weight of the insect repelling substance with which it is mixed.

U.S. Patent 6,015,570 and U.S. Patent 6,326,015 teach slow release insect repellent compositions and uses. Disclosed are fabric substrates that are treated with an insect repellent composition comprising an insect repellent such as DEET, at least two reactive silicones and starch. One object of this invention is to provide an insect repellent composition, and a process of making the same, such that the insect repellent is slowly released from the composition, and thus also the fabric.

U.S. Patent 5,750,129 teaches the use of composite polymer dispensers capable of controlled release of semiochemicals. The dispensers use a solid elastomer matrix reservoir that is contained in a permeable polymeric membrane to allow for the release of the semiochemical over a period of time (several days). These devices are said to be useful in controlling insects.

US 2003 235 601 discloses dihydronepetalactone (DHN) diastereomers derived by hydrogenation of nepetalactone, and compositions thereof, as effective insect repellents against several species of insects of particular interest to people, including mosquitoes, stable flies and deer ticks. Results substantially equivalent to DEET are demonstrated.

### Summary

One embodiment of this invention is a composition comprising a clay having a layered structure with interstices, and a component selected from the group consisting of a dihydronepetalactone, a derivative of a dihydronepetalactone, a nepetalactam, an N-substituted nepetalactam, a dihydronepetalactam, an N-substituted dihydronepetalactam, and mixtures thereof.

Another embodiment of this invention is a process for preparing a composition as described above by dissolving the component in a solvent to form a solution, contacting with the solution a clay having a layered structure with interstices, and driving off the solvent to yield a dry powder.

This invention further provides for a perfumed or tick- or insect-repellent formulation or article of manufacture that includes a composition as described above; and thus correspondingly provides a method of making a perfumed or tick- or insect-repellent formulation or article of manufacture by forming the formulation from, or incorporating into the article, a composition as described above.

In particular, this invention further provides a topical treatment for skin, such as a fragrance or perfume, or a repellent for a tick or insect, that includes a composition as described above.

The invention also provides a method of repelling one or more ticks or insects by exposing the tick or insects to a composition as described above. In particular, this invention provides a method of repelling a tick or insect by applying to a surface of a host for the tick or insect, such as the skin, hide, hair, fur or feathers of the host, a composition as described above.

### Brief Description of the Drawings

Figure 1 depicts various stereoisomers of DHN.
Figure 2 depicts the thermogravimetric analysis (TGA) of a DHN-clay composition of the invention juxtaposed against the thermal gravimetric analysis of a DEET-clay composition and a nepetalactone-clay composition.
Figure 3 depicts the isothermal weight loss at 37°C over 4000 minutes of a DHN-clay composition of the invention juxtaposed against those of a DEET-clay composition and a nepetalactone-clay composition.
Figure 4 depicts the mosquito repellency of compositions of DHN and Laponite-clay.

### Detailed Description

In one embodiment, the present invention provides for a composition containing a clay having a layered structure with interstices, and one or more components selected from the group consisting of dihydronepetalactone or a derivative thereof, a nepetalactam, an N-substituted nepetalactam, a dihydronepetalactam and an N-substituted dihydronepetalactam. In a preferred embodiment, the dihydronepetalactone, nepetalactam, dihydronepetalactam, or respective derivative, or mixture thereof, functions in the clay composition as an insect repellant active ingredient.

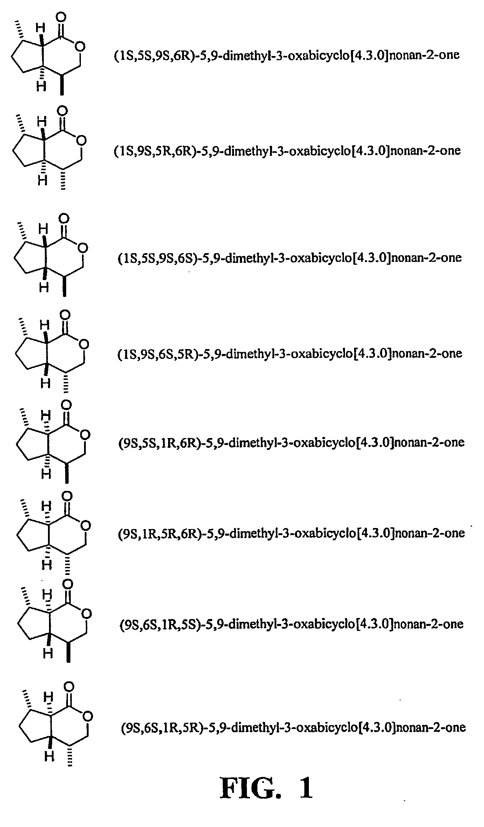

The terms "dihydronepetalactone" and "DHN" shall be herein taken to encompass any stereoisomer of dihydronepetalactone, or any combination of said stereoisomers, as well as a combination thereof which may further include a derivative of DHN such as is described below. The stereoisomers of DHN are shown in Figure 1. Of particular interest are
(1S,9S,5R,6R)-5,9-dimethyl-3-oxabicyclo[4.3.0]nonan-2-one,
(1S,5S,9S,6S)-5,9-dimethyl-3-oxabicyclo [4.3.0] nonan-2-one,
(1S,9S,6S,5R)-5,9-dimethyl-3-oxabicyclo[4.3.0]nonan-2-one,
(9S,5S,1R,6R)-5,9-dimethyl-3-oxabicyclo[4.3.0]nonan-2-one, and
(9S,1R,5R,6R)-5,9-dimethyl-3-oxabicyclo[4.3.0]nonan-2-one.

The DHNs, or derivatives thereof, suitable for the practice of the invention are represented by the Formula (I) 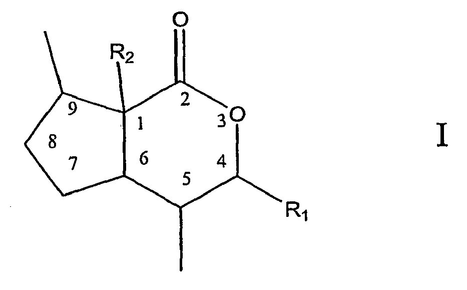 wherein R₁, is hydrogen, C₁~C₂₀ alkyl or C₆~C₂₀ aryl, and R₂ is hydrogen or C₁~C₂₀ alkyl. Representative values for R₁ and/or R₂ may include, in addition to hydrogen, normal or branched C₁~C₂₀ alkyl such as sec-butyl or neo-pentyl, and is preferably normal C₁~C₁₂ alkyl such as methyl, ethyl, propyl, butyl, pentyl or hexyl; or R₁ and/or R₂ may be substituted or unsubstituted C₆~C₂₀ phenyl, and is preferably unsubstituted or meta- or para-substituted phenyl, where the substituent on phenyl may be normal C₁~C₁₂ alkyl or alkoxy, or halogen. In a derivative, R₁ and/or R₂ is most preferably methyl or ethyl, phenyl, or para- or meta-tolyl.

Formula (I), which does not indicate stereochemistry, shall be herein taken to encompass any stereoisomer of DHN, and any stereoisomer of a derivative of DHN, any combination of DHN stereoisomers, any combination of the stereoisomers of a DHN derivative, as well as any combination of one or more isomers of DHN together with one or more isomers of a derivative of DHN.

DHN may be prepared by direct synthesis, isolated from various natural sources, or prepared by the catalytic hydrogenation of nepetalactone. The hydrogenation of nepetalactone extracted from the essential oil of the nepeta (catmint) plant is the preferred method for preparation of DHN. The nepetalactone is present in large quantity in the essential oil of the *nepeta* plant leaves, and is readily purified therefrom. This produces a highly desirable natural product route to the DHN.

The catalytic hydrogenation of nepetalactone to DHN may be performed according to the method in Regnier, F.E. et al, Phytochemistry, 6:1281-1289 (1967) wherein catalysts such as platinum oxide and palladium supported on strontium carbonate give dihydronepalactone in 24-90% yields. Preferably DHN is prepared by catalytic hydrogenation according to the method in US 2003 225 290. This method involves the use of catalytic metals such as ruthenium, rhenium, rhodium, iridium, compounds thereof, and combinations thereof, and, when used, supports such as carbon, alumina, silica, silica-alumina, titania, titania-alumina, titania-silica, barium, calcium, compounds thereof, and combinations thereof.

DHN may also be prepared by contacting nepeatalactone with an aqueous base. Suitable bases include alkali metal, alkaline earth metal, and ammonium hydroxides. Sodium, potassium, lithium, calcium, magnesium, ammonium, and tetra-alkyl ammonium hydroxides are preferred. The step of forming a basic mixture is then followed by a step of acidification with an acid to form nepetalic acid. The extracted aqueous solution, as described above, is in this step subjected to gradual acidification to a pH below about 4, preferably to a pH of about 3 or below. Acidification is preferably achieved using a strong mineral acid, such as hydrochloric, nitric, or sulfuric acids.

Nepetalic acid made as described above is then subjected to deprotonation, and to reduction of the product thereof to DHN. For this purpose, the nepetalic acid may, in one embodiment, be contacted with a non-aqueous base such as a hydride to effect deprotonation at a temperature in the range of 0°C to about 25°C. Also useful for the deprotonation are amines, particularly triethylamine. Following the deprotonation step, the resulting salt is contacted with a reducing agent to form the DHN product. Suitable reducing agents include borohydrides and dialkylboranes. In a preferred embodiment, the separate deprotonation step is eliminated by employing an excess of the reducing agent (such as NaBH₄) - that is, more than one equivalent, preferably slightly more than two equivalents of the reducing agent to effect both the deprotonation and reduction in a single step. Further description of DHN, its uses and processes for making it are disclosed in US 2005 137252.

The DHN prepared from natural sources will necessarily represent a mixture of stereoisomers that may be separated into its component parts or not, depending upon the requirements of the specific application. It has been observed that variations in composition vary across different species of the *nepeta* genus; in certain species there is variation in composition among plants of the same species. The latter species are less preferred sources of starting material.

Fractional distillation has been found in the practice of the invention to be an effective method for both purifying nepetalactone from the essential oils, and for separating diastereomeric DHN pairs prepared therefrom. Chromatographic separations are also suitable.

DHN prepared according to any method, which may be in the form of a single stereoisomer, a diastereomeric pair, or a mixture of isomers, may be converted to a derivative thereof by substitution at position 4 as shown in Formula (I). Substitution at the C-4 position in Formula (I) may be accomplished by Grignard reagent nucleophilic addition to electrophilic nepetalic acid, the hydrated form of nepetalactone. Nepetalic acid is treated with a non-aqueous base in a deprotonation step to form a carboxylate salt. In one embodiment, for example, the nepetalic acid is treated with an alkali metal hydride, preferably KH. In this embodiment, the deprotonation step is followed by treatment with Grignard reagent to form a DHN derivative. In a further embodiment, the nepetalic acid is treated with more than one equivalent of Grignard reagent, and preferably at least two equivalents of Grignard reagent to effect formation of the derivative. This process eliminates the step of first treating nepetalic acid with a separate non-aqueous base such as an alkali metal hydride. Use of an amount of Grignard reagent in slight excess of two equivalents ensures high conversion to the desired product.

Typical Grignard reagents include, but are not limited to, those that are prepared by the union of metallic magnesium with an organic chloride, bromide or iodide usually in the presence of ether and in the complete absence of water. Suitable for use in such a process are any Grignard reagents that are reactive with aldehydes including but not limited to alkyl magnesium chlorides, alky magnesium bromides, aryl magnesium chlorides, and aryl magnesium bromides. Also included are dialkylzincs, diarylzincs and alkyllithiums and aryllithiums. Representative substituents that may be present on suitable Grignard reagents include methyl, ethyl, n-propyl, butyl, pentyl, hexyl phenyl, para- and meta-substituted phenyl including para- and meta-tolyl, and para-methoxy-phenyl. Further description of derivatives of DHN, their uses and processes for making them are disclosed in US 2005 239875.

DHN may be alternatively or further derivatized by substitution at the C-1 position in Formula (I), which may be accomplished by alkylation of the enolate of the lactone (nucleophile) with an alkylating reagent such as iodomethane (electrophile) to introduce a non-hydrogen substiuent at the bridgehead. In general, bases such as lithium diisopropylamine or LDA are used for enolate generation, but many bases are suitable depending upon the particular requisites of the reaction. Alkylating agents such as alkyl halides are preferred but many alkylating agents are suitable depending upon the requisites of the specific reaction.

Nepetalactams, and a derivative thereof such as an N-substituted nepetalactams, suitable for use herein as an insect repellant active ingredient may be represented schematically by Formula (III): 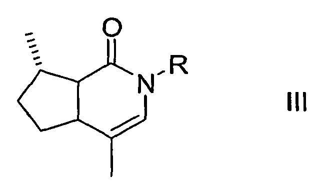 wherein R is alkane, alkene, alkyne or aromatic.

In various embodiments, R in Formula (III) may be selected from the group consisting of: 1) H or C₂H₅, 2) C₃ to C₂₀ straight-chain, branched or cyclic alkane or alkene, 3) C₃ to C₂₀ straight-chain, branched or cyclic alkane or alkene comprising a heteroatom selected from the group consisting of O, N and S, 4) unsubstituted or substituted C₆ to C₂₀ aromatic, wherein the substituent is selected from the group consisting of C₁ to C₁₂ straight-chain, branched or cyclic alkane or alkene, and 5) unsubstituted or substituted C₆ to C₂₀ aromatic comprising a heteroatom selected from the group consisting of O, N and S, wherein the substituent is selected from the group consisting of C₁ to C₁₂ straight-chain, branched or cyclic alkane or alkene. The substituted or unsubstituted nepetalactam compound of Formula (III) may be a single stereoisomer of a single compound, may be a mixture of stereoisomers of a single compound, or may be a mixture of stereoisomers of compounds in which R is different.

Nepetalactams as described above may be prepared by contacting nepetalactone with anhydrous ammonia according to the method described by Eisenbraun, et al in J. Org. Chem., 53:3968-3972 (1988). *N-*Substituted nepetalactams are then formed by reacting nepetalactam with an appropriate metal hydride to form a nepetalactam salt, followed by contacting the nepetalactam salt with an appropriate alkylating agent to form the N-substituted nepetalactam. Further description of nepetalactams and N-substituted nepetalactams, their uses and processes for making them are disclosed in US 2006 148 842.

Dihydronepetalactams, and a derivative thereof such as an N-substituted dihydronepetalactams, suitable for use herein as an insect repellant active ingredient may be represented schematically by Formula (IV): 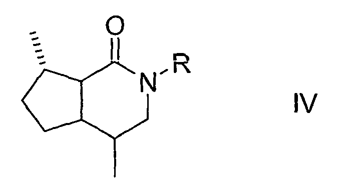 wherein R is alkane, alkene, alkyne or aromatic.

In various embodiments, R in the compound of Formula (IV) may be selected from the group consisting of: 1) H or C₂H₅, 2) C₃ to C₂₀ straight-chain, branched or cyclic alkane or alkene, 3) C₃ to C₂₀ straight-chain, branched or cyclic alkane or alkene comprising a heteroatom selected from the group consisting of O, N and S, 4) unsubstituted or substituted C₆ to C₂₀ aromatic, wherein the substituent is selected from the group consisting of C₁ to C₁₂ straight-chain, branched or cyclic alkane or alkene, and 5) unsubstituted or substituted C₆ to C₂₀ aromatic comprising a heteroatom selected from the group consisting of O, N and S, wherein the substituent is selected from the group consisting of C₁ to C₁₂ straight-chain, branched or cyclic alkane or alkene. The substituted or unsubstituted nepetalactam compound of Formula (IV) may be a single stereoisomer of a single compound, may be a mixture of stereoisomers of a single compound, or may be a mixture of stereoisomers of compounds in which R is different.

Dihydronepetalactams as described above may be prepared by alkylation of neptelactam, followed by hydrogenation, or by alkylation of dihydronepetalactam. Nepetalactam may be prepared by contacting nepetalactone with anhydrous ammonia according to the method described by Eisenbraun *supra*. N-Substituted dihydronepetalactams are synthesized by hydrogenation of nepetalactam to dihydronepetalactam followed by alkylation of the lactam nitrogen, or by alkylation of nepetalactam followed by hydrogenation of the N-substituted nepetalactam. Hydrogenation of nepetalactams may be effected in the presence of a suitable active metal hydrogenation catalyst such as are described in Augustine, Heterogeneous Catalysis for the Synthetic Chemist, Marcel Decker, New York, N.Y. (1996). *N*-Substituted dihydronepetalactams may also be formed by reacting dihydronepetalactam with an appropriate metal hydride to form a dihydronepetalactam salt, followed by contacting the dihydronepetalactam salt with an appropriate alkylating agent to form the N-substituted dihydronepetalactam. Metal hydrides are used to generate the amide-metal salt of dihydronepetalactam. Suitable metal hydrides include, but are not limited to, potassium hydride and sodium hydride. Alkylating agents suitable for *N*-alkylation of the dihydronepetalactam salt include alkanyl, alkenyl, alkynyl or aryl chlorides, bromides, iodides, sulfates, mesylates, tosylates and triflates. Further description of dihydronepetalactams and N-substituted dihydronepetalactams, their uses and processes for making them are disclosed in US 2006 228 387.

In a clay composition as described above, the dihydronepetalactone, nepetalactam, dihydronepetalactam or respective derivative may be a single stereoisomer of one compound, a mixture of stereoisomers of one compound, respective single stereoisomers of two or more separate compounds, or a blend of respective mixtures of stereoisomers of two or more separate compounds.

The effectiveness of an insect repellant active ingredient as used in the compositions of this invention depends upon the surface concentration of the active ingredient, whether one or more, on the host surface to which it is applied. In an insect repellent composition according to this invention, a concentration of active ingredient much below 1% requires repeated application to achieve an effective surface concentration. On the other hand, concentration above 50% results in excessive surface concentration, which is wasteful.

In an insect repellant composition, it is typically desirable to reduce the rate of evaporation the active ingredient in order to prolong the insect repellent effect. The compositions and methods of the present invention provide reduced absorption into skin, prolonged insect repellent effect, and thus effective use of the active ingredient(s). The method of the present invention provides greatly prolonged insect repellency over insect repellent compositions in which the active ingredient is applied directly to a surface from an alcohol solution. Furthermore, the clay compositions hereof greatly reduce or eliminate absorption of the active ingredient into human or animal skin.

In preparing the compositions of this invention, the component as described above is dissolved in a solvent to form a solution; a clay having a layered structure with interstices is contacted with the solution; and the solvent is driven off to yield a dry powder comprising a clay having a layered structure with interstices. In a preferred embodiment, the component, such as an insect repellant active ingredient, is disposed within said interstices. The solvent is typically removed under vacuum, and non-toxic solvents that can be readily removed under vacuum are thus preferred. Preferred are alcohols, and isopropanol is most preferred.

The active ingredient is combined with a clay having a layered structure with interstices, and the composition thus formed may have an active ingredient to clay concentration ratio of 1:5 to 5:1, preferably 3:5 to 5:3, and more preferably 4:5 to 5:4. The concentration ratio can be changed by either using different amounts of the solution of the active ingredient, or by changing the concentration of the active ingredient in the solution to begin with. In one embodiment, a 1:1 by weight loading of active ingredient to clay is achieved by contacting clay with a 10 weight percent solution of the active ingredient in isopropanol. In this embodiment, for example, 10 mL of a 10 wt% solution (1g active ingredient total) is mixed with 1g of clay to make a 1:1 by weight loading of clay/active ingredient after the solvent is driven off.

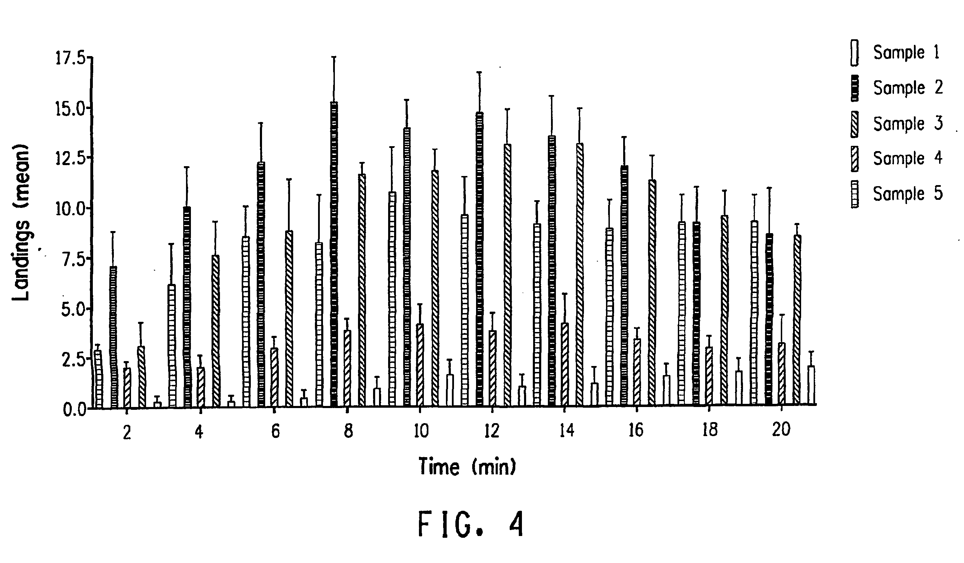

In one preferred embodiment, the compositions of the present invention are dispersed in an aqueous solution to provide a water-based formulation or gel. This is one preferred embodiment for application to human skin. However applied, the clay particles act as a reservoir for the active ingredient that sits on the skin surface where it slowly releases the active ingredient at body temperature, as shown in Figure 4.

Numerous clays having a layered structure with interstices exist in nature, are quite inexpensive, and are suitable for use herein. However, also contemplated as part of the present invention are synthetic inorganic materials that resemble clay in respect to chemical composition, crystallinity, and layered morphology. Suitable clays having a layered structure with interstices include smectite, kaolin, muscovite, vermiculite, phlogopite, xanthophyllite, and chrysotile, and mixtures thereof. Preferred are smectite clays and kaolin clays. Smectite clays include montmorillonite, beidellite, nontronite, saponite, hectorite, sauconite, and others. Kaolin clays include kaolinite, deckite, nacrite, antigorite, and others. Most preferred is montmorillonite. Average particle sizes range from 0.5 to 50 micrometers.

Different clays will have different capacities for incorporation of the active ingredient. When a clay is saturated, excess active ingredient may cause the clay to form an unstable aqueous suspension. This is illustrated below in Example 3 and Comparative Example 3.

The insect repellant active ingredient used in the compositions of this invention may be used for a variety of purposes in addition to its use as an active in an effective amount for the repellency of various species of ticks or insects. It may, for example, be used as a fragrance compound in a perfume composition, or as a topical treatment for a surface of a human or other animal, such as a domesticated mammal, such as a domesticated mammal such as a pet (for example, a dog, cat or bird) or livestock (for example, cattle, hogs, sheep or poultry). The active ingredient may thus be applied in a topical manner to a surface of a human or domesticated mammal, such as the skin, hide, hair, fur or feathers thereof, or to growing plants or crops, to impart a pleasant odor or aroma thereto in addition to repellency of a tick or insect.

In certain cases, it may be desirable to admix the composition of a clay and the insect repellant active ingredient(s) with a further carrier. Suitable carriers include any one of a variety of commercially available organic and inorganic liquid, solid, or semi- solid carriers or carrier formulations usable in formulating skin or insect repellent products. When formulating a skin product or topical insect repellent, it is preferred to select a dermatologically acceptable carrier. For example the carrier may include water, alcohol, silicone, petrolatum, lanolin or many of several other well known carrier components. Examples of organic liquid carriers include liquid aliphatic hydrocarbons (e.g., pentane, hexane, heptane, nonane, decane and their analogs) and liquid aromatic hydrocarbons.

Examples of other liquid hydrocarbons include oils produced by the distillation of coal and the distillation of various types and grades of petrochemical stocks, including kerosene oils that are obtained by fractional distillation of petroleum. Other petroleum oils include those generally referred to as agricultural spray oils (e.g., the so-called light and medium spray oils, consisting of middle fractions in the distillation of petroleum and which are only slightly volatile). Such oils are usually highly refined and may contain only minute amounts of unsaturated compounds. Such oils, moreover, are generally paraffin oils and accordingly can be emulsified with water and an emulsifier, diluted to lower concentrations, and used as sprays. Tall oils, obtained from sulfate digestion of wood pulp, like the paraffin oils, can similarly be used. Other organic liquid carriers can include liquid terpene hydrocarbons and terpene alcohols such as alpha-pinene, dipentene, terpineol, and the like.

Other carriers include silicone, petrolatum, lanolin, liquid hydrocarbons, agricultural spray oils, paraffin oil, tall oils, liquid terpene hydrocarbons and terpene alcohols, aliphatic and aromatic alcohols, esters, aldehydes, ketones, mineral oil, higher alcohols, finely divided organic and inorganic solid materials. In addition to the above-mentioned liquid hydrocarbons, the carrier can contain conventional emulsifying agents which can be used for causing the composition of this invention to be dispersed in, and diluted with, water for end-use application. Still other liquid carriers can include organic solvents such as aliphatic and aromatic alcohols, esters, aldehydes, and ketones. Aliphatic monohydric alcohols include methyl, ethyl, normal-propyl, isopropyl, normal-butyl, sec-butyl, and tert-butyl alcohols. Suitable alcohols include glycols (such as ethylene and propylene glycol) and pinacols. Suitable polyhydroxy alcohols include glycerol, arabitol, erythritol, sorbitol, and the like. Finally, suitable cyclic alcohols include cyclopentyl and cyclohexyl alcohols.

Conventional aromatic and aliphatic esters, aldehydes and ketones can be used as carriers, and occasionally are used in combination with the above-mentioned alcohols. Still other liquid carriers include relatively high-boiling petroleum products such as mineral oil and higher alcohols (such as cetyl alcohol). Additionally, conventional or so-called "stabilizers" (e.g. tert-butyl sulfinyl dimethyl dithiocarbonate) can be used in conjunction with, or as a component of, the carrier or carriers comprising the compositions of the present invention.

Desirable properties of a topical insect repellent, including embodiments wherein the repellent is present in or as an article, include low toxicity, resistance to loss by water immersion or sweating, low or no odor or at least a pleasant odor, ease of application, and rapid formation of a dry tack-free surface film on the surface to which applied. In order to obtain these properties, the formulation for a topical insect repellent should provide an easy treatment to establish for a host that is infested with or susceptible to ticks or insects effective repellency against such pests. For such purpose, the formulation may be used as a topical treatment for a surface of a human, or other animal such as a domesticated mammal such as a pet (for example, a dog, cat or bird) or livestock (for example, cattle, hogs, sheep or poultry). The active ingredient may thus be applied in an effective amount in a topical manner to a surface of a human or other animal, such as a domesticated mammal, which surface may include the skin, hide, hair, fur or feathers thereof.

Dispersing the repellent into the air or dispersing the repellent as a liquid mist or incorporated into a foam, powder or dust will thus permit the repellent to fall on the desired host surfaces. It may also be desirable to formulate an insect repellent by combining the composition of this invention with a fugitive vehicle for application in the form of a spray. Such a composition may be an aerosol adapted to disperse the clay/active ingredient composition into the atmosphere by means of a compressed gas, or a mechanical pump spray. Likewise, directly spreading of a liquid/semi-solid/solid repellent composition on the host is an effective method of contacting the surface of the host with an effective amount of the repellent.

In the composition of this invention, the active ingredient may also be combined with other insect repellent substances. Suitable other insect repellents combinable for such purpose include but are not limited to benzil, benzyl benzoate, 2,3,4,5-bis(butyl-2-ene) tetrahydrofurfural, butoxypolypropylene glycol, N-butylacetanilide, normal-butyl-6,6-dimethyl-5,6-dihydro-1,4-pyrone-2-carboxylate, dibutyl adipate, dibutyl phthalate, di-normal-butyl succinate, N,N-diethyl-meta-toluamide (DEET), dimethyl carbate, dimethyl phthalate, 2-ethyl-2-butyl-1,3-propanediol, 2- ethyl-1,3-hexanediol, di-normal-propyl isocinchomeronate, 2-phenylcyclohexanol, p-methane-3,8-diol, and normal-propyl N, N-diethylsuccinamate.

In addition to an insect repellant active ingredient as described above, the composition of this invention may also include one or more essential oils and/or active ingredients of essential oils. "Essential oils" are defined as any class of volatile oils obtained from plants possessing the odor and other characteristic properties of the plant. Examples of useful essential oils include: almond bitter oil, anise oil, basil oil, bay oil, caraway oil, cardamom oil, cedar oil, celery oil, chamomile oil, cinnamon oil, citronella oil, clove oil, coriander oil, cumin oil, dill oil, eucalyptus oil, fennel oil, ginger oil, grapefruit oil, lemon oil, lime oil, mint oil, parsley oil, peppermint oil, pepper oil, rose oil, spearmint oil (menthol), sweet orange oil, thyme oil, turmeric oil, and oil of wintergreen. Examples of active ingredients in essential oils are: citronellal, methyl salicylate, ethyl salicylate, propyl salicylate, citronellol, safrole, and limonene.

The insects that may be repelled by the compositions of this invention may include any member of a large group of invertebrate animals characterized, in the adult state (non-adult insect states include larva and pupa) by division of the body into head, thorax, and abdomen, three pairs of legs, and, often (but not always) two pairs of membranous wings. This definition therefore includes a variety of biting insects (*e.g.* ants, bees, chiggers, fleas, mosquitoes, ticks, biting midges, Reduviid bugs, wasps), biting flies [*e.g.* black flies, green head flies, stable flies, horn flies (haematobia irritans)], wood-boring insects (*e.g.* termites), noxious insects (*e.g.* houseflies, cockroaches, lice, roaches, wood lice), and household pests (*e.g.* flour and bean beetles, dust mites, moths, silverfish, weevils). A host from which it may be desired to repel an insect may include any plant or animal (including humans) affected by insects. Typically, hosts are considered to be insect-acceptable food sources or insect-acceptable habitats. In one embodiment, a method of this invention thus includes a method of repelling one or more insects, such as those named above, by exposing the insect(s) to a composition of this invention. Correspondingly, another embodiment of this invention is a method of treating the skin, fur or feathers of an insect host by applying to the skin, fur or feathers a composition of this invention.

In another embodiment, however, a composition of this invention may be used as a fragrance compound or in a fragrance composition, and be applied in a topical manner to human or animal skin, hide, hair, fur or feathers to impart a pleasing fragrance, as in skin lotions and perfumes. Particularly because of the pleasant aroma associated with the compositions hereof, a further embodiment of this invention is one in which a composition of this invention is formulated into a further composition for use as a product that is directed to other purposes separately or together with its use as an insect repellant. The fragrance and/or insect repellency of such products will be enhanced by the presence therein of a composition of this invention.

Included among such products (but not thereto limited) are colognes, lotions, sprays, creams, gels, ointments, bath and shower gels, foam products (*e.g*. shaving foams), makeup, deodorants, shampoo, hair lacquers/hair rinses, and personal soap compositions (*e.g.* hand soaps and bath/shower soaps). A composition of this invention may, of course, be incorporated into such a product simply to impart a pleasing aroma. Any means of incorporation such as is practiced in the art is satisfactory.

A corresponding aspect of the wide variety of products obtainable from a composition of this invention, as discussed above, is a further alternative embodiment of this invention, which is a process for fabricating a composition of matter, a topical treatment for a surface, or an article of manufacture, by providing as the composition, or incorporating into the composition, surface treatment or article, a clay/active ingredient composition of this invention. Such products, and the methods and processes described above, illustrate the use of a composition of this invention as a tick or insect repellant, as a fragrance compound or perfume, or in a fragrance composition or formulation, or in a topical treatment for a surface, or in an article of manufacture.

A composition of this invention, whether prepared as an insect repellent, fragrance product, or other personal care product, may also contain other therapeutically or cosmetically active adjuvants or ingredients as are typical in the personal care industry. Examples of these include fungicides, sunscreening agents, sunblocking agents, vitamins, tanning agents, plant extracts, anti-inflammatory agents, anti-oxidants, radical scavenging agents, retinoids, alpha-hydroxy acids, antiseptics, antibiotics, antibacterial agents, antihistamines; adjuvants such as thickeners, buffering agents, chelating agents, preservatives, gelling agents, stabilizers, surfactants, emolients, coloring agents, aloe vera, waxes, and penetration enhancers; and mixtures of any two or more thereof.

When a composition of this invention is incorporated into a further formulation, the amount of the composition of this invention contained in the formulation will generally not exceed about 80% by weight based on the weight of the final product, however, greater amounts may be utilized in certain applications and this amount is not limiting. More preferably, a suitable amount for the presence of the composition of this invention will be at least about 0.001% by weight and preferably about 0.01% up to about 50% by weight; and more preferably, from about 0.01% to about 20% weight percent, based on the weight of the final formulation, article or product.

In a further embodiment of this invention, a composition of this invention is incorporated into an article to produce the effect of repelling ticks or insects. Articles contemplated to fall within this embodiment include manufactured goods, including textile goods such as clothing, outdoor or military equipment as mosquito netting, natural products such as lumber, or the leaves of insect vulnerable plants.

In another embodiment of this invention, a composition of this invention is incorporated into an article to produce repellency of a fragrance pleasing to humans, or a composition of this invention is applied to the surface of an object to impart repellency or an odor thereto. The particular manner of application will depend upon the surface in question and the concentration required to impart the necessary repellency or intensity of odor. Articles contemplated to fall within these embodiments include manufactured goods, including textile goods, air fresheners, candles, various scented articles, fibers, sheets, paper, paint, ink, clay, wood, furniture (e.g. for patios and decks), carpets, sanitary goods, plastics, polymers, and the like.

Other uses for or formulations of a composition of this invention are as disclosed in US 2003/062,357; US 2003/079,786; and US 2003/191,047, each of which is incorporated in its entirety as a part hereof.

The present invention is further described in, but not limited by, the following specific embodiments.

### Examples

### General Procedures

All reactions and manipulations were carried out in a standard laboratory fume hood open in standard laboratory glassware. Nepetalactones were obtained by steam distillation of commercially-available catnip oil from catmint, obtained from Berjé, (Bloomfield, NJ). All inorganic salts and organic solvents, with the exception for anhydrous THF, were obtained from VWR Scientific. All other reagents including DEET and hydrogenation catalysts used in the subsequent procedures were obtained from Sigma-Aldrich Chemical (Milwaukee, WI) and used as received. Determination of pH was done with pHydrion paper from Micro Essential Laboratory. NMR spectra were obtained on a Bruker DRX Advance (500 MHz ¹H, 125 MHz ¹³C) using deuterated solvents obtained from Cambridge Isotope Laboratories. Cloisite and Laponite clays were obtained from Southern Clay Products (Gonzales, Texas).

Abbreviations used herein are:
DEET = N,N-diethy-meta-ltoluamide
DHN = dihydronepetalactone
THF = tetrahydrofuran
RT = room temperature
TLC = thin layer chromatography
FTIR = Fourier transform infrared spectroscopy
TGA = thermogravimetric analysis
no. = number.

In the following examples, the notation "w/v" refers to the weight in grams of the active ingredient per 100 mL of solution.

### Example 1

### Purification of nepetalactone

Catmint oil containing approximately 75% *trans,* cis-nepetalactone (60g, lot number 22941) was placed into a 500 mL round-bottomed flask and treated with petroleum ether (200 mL) with stirring at RT. Upon cooling to 0° C, a white solid precipitated from the solution and settled on the bottom of the flask. The white solids were filtered, washed with petroleum ether cooled to 0°C and dried under vacuum. The white solid product obtained (30 g, 50%) was determined to be trans, *cis*-nepetalactone by NMR analysis and gave a melting point of 27-29°C. The observed spectral properties were consistent with the structural representation of *trans,* cis-nepetalactone depicted in Formula IVb

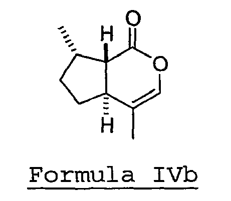

### Hydrogenation of nepetalactone

10 g of the trans, cis-nepetalactone so prepared was dissolved in 100mL of ethanol. The resulting solution was added to a 500 mL Fisher-Porter bottle and treated with 2 wt % palladium on strontium carbonate (1.2 g) and connected to a hydrogen line. The flask was charged with hydrogen and then evacuated twice and then pressured with hydrogen to 15 psi and was stirred at RT. After 17 hours, the vessel was vented and the resulting mixture was filtered through celite and washed with ethanol (100 mL). The filtrate was subject to evacuation to remove the solvent, leaving an oily residue. The oily residue was purified by column chromatography on silica gel, eluting with 10% ethyl acetate in hexanes TLC was used to identify the product containing fractions. The product containing fractions were combined and removal of solvent under vacuum afforded the product as a white solid (10 g, 100%) that gave a melting point of 31-32° C. NMR analysis and the product's observed spectral properties were consistent with the structural representation of the DHN diastereomer depicted in Formula IX.

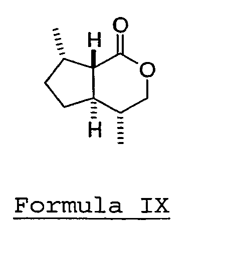

### Preparation of DHN/cloisite clay sample

500 mg of the DHN so prepared was dissolved in 5 mL of isopropanol. The resulting solution was combined in a 20 ml scintillation vial with 500 mg of cloisite clay and shaken in a VWR Scientific Vortex-Genie II Shaker overnight. The solvent was then removed from the mixture under vacuum resulting in a white powder (1.0 g). FTIR analysis of the product indicated the presence of DHN by the carbonyl peak at 1768 cm⁻¹.

### Comparative Example 1

### Preparation of nepetalactone/cloisite clay sample

500 mg of the trans, cis-nepetalactone prepared in Example 1 was dissolved in 5 mL of isopropanol. The resulting solution was combined with 500 mg of cloisite clay following the procedures of Example 1. The solvent was then removed from the shaken mixture under vacuum resulting in a white powder (1.0 g). FTIR analysis of the product indicated the presence of *trans*, *cis-*nepetalactone by the carbonyl peak at 1786 cm⁻¹.

### Comparative Example 2

### Preparation of DEET/cloisite clay sample

500 mg of DEET was dissolved in 5 mL of isopropanol. The resulting solution was combined with 500 mg of cloisite clay (500 mg) according to the procedure of Example 1. The solvent was removed from the shaken mixture under vacuum resulting in a white powder (1.0 g). FTIR analysis of the product indicated the presence of DEET by the carbonyl peak at 1666 cm⁻¹.

### Example 2

### Preparation of DHN/Laponite-XLG clay sample

1 g of the DHN prepared in Example 1 was dissolved in 1 mL of isopropanol. 0.100 mL of the resulting solution was combined with 500 mg of Laponite-XLG clay and 10 mL of distilled water following the procedure of Example 1. The mixture gelled on standing.

### Example 3 and Comparative Example 3

### Preparation of DHN/Laponite-RDS clay sample

0.6 g of the DHN prepared in Example 1 was dissolved in 1 mL of isopropanol. 0.100 mL of the resulting solution was combined with 500 mg of Laponite-RDS clay and 10 mL of distilled water according to the procedure of Example 1. A clear, stable mixture was obtained.

When a solution consisting of 1g of DHN in 1 mL of isopropanol was employed in place of the 0.6g/1mL sample, it was observed that on standing, the resulting dispersion was unstable, and clay particles began to agglomerate and separate out.

### Example 4

### TGA/FTIR analysis of samples

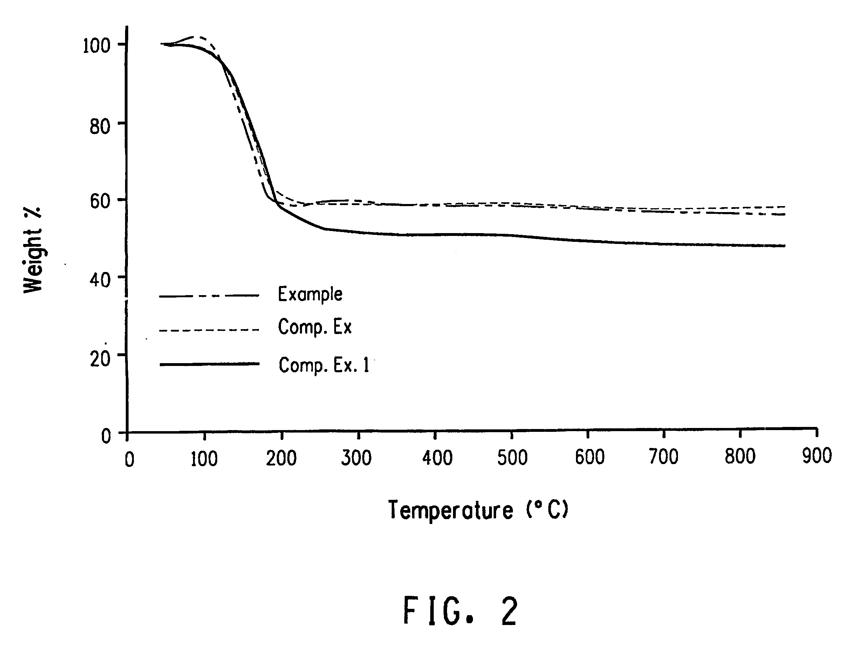

Samples of the treated clay compositions of Example 1, Comparative Example 1, and Comparative Example 2 in the amounts shown as "Sample Size" in Table 1 were placed in glass crucibles and heated in a Mettler-Toledo TGA/SDTA 851 thermogravimetric analyzer interfaced to a Nicolet Nexus 670 FTIR spectrometer. The specimen was heated from 25°C to 300°C at 10°C/minute with an isothermal hold for 5 minutes. The instrument was purged with dry air at 80 mL/minute. All off gases were monitored as they passed through a 20 cm pathlength gas cell with the FTIR spectrometer operated at 4 cm⁻¹ resolution and 28 scans co-added to yield a spectrum about every 30 seconds during the run. All gases were collected in a polyvinylfluoride gasbag for post-run analysis in a 10M-gas cell. The increased pathlength (50x) allows detection of minor or slowly evolved gases not detected by on-line analysis. The TGA results are shown in Figure 2. The FTIR analysis confirmed that the substance being evolved was the insect repellent with which the clay had been treated. The total weight loss observed is shown in Table 1.

**Table 1**

| Weight loss of repellent-treated clays in TGA-FTIR | | | |
|---|---|---|---|
| Example | Repellent | sample size (mg) | total weight loss (mg) |
| Comparative Example 1 | *trans, cis-* nepetalactone | 50 | 21.0 (41.9 %) |
| Example 1 | DHN | 50 | 25.8 (51.6%) |
| Comparative Example 2 | DEET | 100 | 51.0 (51.0%) |

### Example 5

### Isothermal TGA of samples at 37°C

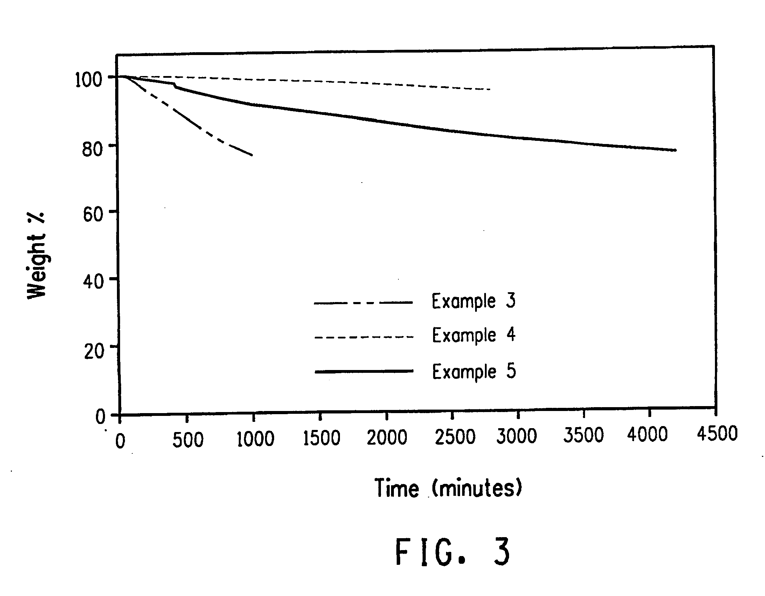

Using a DuPont Instruments Model 951 TGA, samples of repellent-treated clays from Example 1, Comparative Example 1, and Comparative Example 2 were loaded onto platinum sample pans and heated to and held at 37°C for 4,200 minutes, while nitrogen at 100 cc/min flowed over the samples. Weight loss was observed for all samples. The percentage of weight remaining over the duration of the experiment is shown in Table 2 and Figure 3. The sample size, and the averaged rate of weight loss over the duration of the experiment are shown in Table 3.

**Table 2**

| Amount of repellent loss from repellent-treated clays at 37°C | | | |
|---|---|---|---|
| Weight percent of repellant remaining in sample at time indicated | | | |
| Time (min) | Comp. Ex 1 | Example 1 | Comp. Ex. 2 |
| 0 | 100 | 100 | 100 |
| 10 | 100.2 | 99.89 | 100.1 |
| 20 | 100.1 | 99.84 | 100.1 |
| 30 | 99.98 | 99.78 | 100.2 |
| 40 | 99.78 | 99.71 | 100.2 |
| 50 | 99.56 | 99.63 | 100.2 |
| 60 | 99.26 | 99.87 | 100.2 |
| 100 | 98.08 | 99.52 | 100.2 |
| 110 | 97.78 | 99.43 | 100.2 |
| 120 | 97.5 | 99.34 | 100.1 |
| 200 | 95.29 | 98.66 | 99.99 |
| 300 | 92.58 | 97.86 | 99.75 |
| 400 | 89.94 | 96.14 | 99.53 |
| 500 | 87.35 | 95.42 | 99.29 |
| 800 | 80.28 | 93.51 | 98.56 |
| 900 | 78.13 | 92.85 | 98.32 |
| 1000 | 76.21 | 92.21 | 98.08 |
| 1100 | | 91.57 | 97.8 |
| 1200 | | 90.95 | 97.56 |
| 1500 | | 89.13 | 96.88 |
| 1600 | | 88.53 | 96.65 |
| 1800 | | 87.33 | 96.21 |
| 1900 | | 86.74 | 96 |
| 2000 | | 86.16 | 95.78 |
| 2300 | | 84.46 | 95.08 |
| 2500 | 83.36 | 94.62 | |
| 2750 | 82.02 | 94.07 | |
| 3000 | 80.73 | | |
| 3200 | 79.71 | | |
| 3400 | 78.72 | | |
| 3600 | 77.76 | | |
| 3800 | 76.82 | | |
| 4000 | 75.91 | | |
| 4200 | 75.03 | | |

**Table 3**

| Rate of repellent loss from samples at 37°C | | | |
|---|---|---|---|
| Example | Repellent | sample size (mg) | rate of weight loss (%/min) |
| Comparative Example 1 | *trans, cis-* nepetalactone | 24.135 | 0.025 |
| Example 1 | DHN | 34.782 | 0.064 |
| Comparative Example 2 | DEET | 28.016 | 0.0023 |

### Example 6

### Mosquito repellency of samples

To each well in a Gupta box containing five wells was added bovine blood containing sodium citrate and 72 mg of ATP disodium salt per 26 mL of blood. Each well so-prepared was then covered by a Baudruche (animal intestine) membrane. The wells were then heated to 37°C. The amounts of the prepared clay specimens as specified in Table 4 were applied to each of the membranes respectively. After 5 min, approximately 250 four day-old female *Aedes aegypti* mosquitoes were added to the chamber. The number of mosquitoes landing on the membranes for each treatment was recorded at 2 minute intervals over 20min.

As indicated in Table 4, several control samples were prepared for the purpose of this experiment. A 1g/100 mL solution of the DHN prepared in Example 1 in isopropanol was prepared as a control representing a common means for applying insect repellents, namely isopropanol solution. Further, combinations of just the pure clays, without DHN or any other insect repellent, were prepared. The clay specimens were prepared by mixing with water and shaking overnight.

**Table 4**

| DHN samples evaluated for mosquito repellency | | | |
|---|---|---|---|
| Sample no. | Sample contents | Sample description | Amount Added |
| 1 | 1% w/v DHN in isopropanol | clear solution | 25 mL |
| 2 | 1% w/v Laponite-RDS water | in clear solution | 25mL |
| 3 | 1% w/v Laponite-XLG water | in clear gel | 28mg |
| 4 | Example 2 | clear gel | 28mg |
| 5 | Example 3 | clear solution | 25mL |

The results in Table 5 show the number of insect landings, also called "probes," comparing Sample 3 in Table 4 with Sample 4. Figure 4 shows a composite of the results of all five specimens. Figure 4 shows the landings occurring during each two minute interval.

**Table 5**

| Mosquito repellency of Sample 4 vs. Sample 3 | | | | |
|---|---|---|---|---|
| Time (min) | Mean no. of probes of Sample 4 | SEM | Mean no. of probes of Sample 3 | SEM |
| 2 | 2 | 0.3162278 | 3 | 1.140175 |
| 4 | 2 | 0.7071068 | 7.6 | 1.536229 |
| 6 | 3 | 0.7071068 | 9.2 | 2.130728 |
| 8 | 3.8 | 0.5830952 | 11.4 | 0.8124039 |
| 10 | 4 | 1.095445 | 11.6 | 1.28841 |
| 12 | 3.8 | 0.8602325 | 13 | 1.760682 |
| 14 | 4.2 | 1.356466 | 13 | 1.843909 |
| 16 | 3.4 | 0.678233 | 11.2 | 1.2 |
| 18 | 2.8 | 0.663325 | 9.2 | 1.319091 |
| 20 | 3.2 | 1.240967 | 8.4 | 0.8124039 |

It is a surprising aspect of the invention, as demonstrated in the examples above, that the compositions of the present invention provide about four times the duration of effective insect repellency of a similar composition of nepetalactone, but at the same time, a considerably more effective degree of repellency than that achieved from a similar composition of DEET.

## Claims

1. A composition comprising (a) a clay having a layered structure with interstices, and (b) a component selected from the group consisting of a dihydronepetalactone, a derivative of a dihydronepetalactone, a nepetalactam, a dihydronepetalactam, an N-substituted nepetalactam, an N-substituted dihydronepetalactam, and mixtures thereof.

2. A composition according to Claim 1 wherein the component (b) comprises a dihydronepetalactone.

3. A composition according to Claim 1 wherein the component (b) comprises an isomer of dihydronepetalactone selected from the group consisting of
(1S,9S,5R,6R)-5,9-dimethyl-3-oxabicyclo[4.3.0]nonan-2-one,
(1S,5S,9S,6S)-5,9-dimethyl-3-oxabicyclo[4.3.0]nonan-2-one,
(1S,9S,6S,5R)-5,9-dimethyl-3-oxabicyclo[4.3.0)nonan-2-one,
(9S,5S,1R,6R)-5,9-dimethyl-3-oxabicyclo[4.3.0]nonan-2-one, and
(9S,1R,5R,6R)-5,9-dimethyl-3-oxabicyclo[4.3.0]nonan-2-one,
and mixtures thereof.

4. A composition according to Claim 1 wherein the component (b) comprises a derivative of a dihydronepetalactone described by the following structural formula 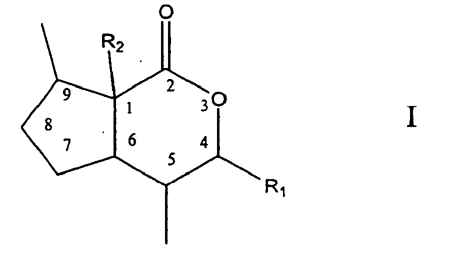 wherein R₁, is hydrogen, C₁~C₂₀ alkyl or C₆~C₂₀ aryl, and R₂ is hydrogen or C₁~C₂₀ alkyl.

5. A composition according to Claim 1 wherein the component (b) comprises a nepetalactam.

6. A composition according to Claim 1 wherein the component (b) comprises a dihydronepetalactam.

7. A composition according to Claim 1 wherein the clay is selected from the group consisting of smectite, kaolin, muscovite, vermiculite, phlogopite, xanthophyllite, and chrysotile, and mixtures thereof.

8. A composition according to Claim 1 further comprising a cosmetic adjuvant.

9. A composition according to Claim 1 formulated as a liquid, foam, powder, semi-solid or solid.

10. A method of repelling one or more ticks and/or insects comprising exposing the tick(s) and/or insect(s) to a composition according to Claim 1.

## Patentansprüche

1. Zusammensetzung umfassend (a) einen Ton, der eine schichtförmige Struktur mit Zwischenräumen aufweist, und (b) eine Komponente, aus der Gruppe ausgewählt ist bestehend aus einem Dihydronepetalacton, einem Derivat eines Dihydronepetalactons, einem Nepetalactam, einem Dihydronepetalactam, einem N-substituierten Nepetalactam, einem N-substituierten Dihydronepetalactam und Mischungen derselben.

2. Zusammensetzung nach Anspruch 1, wobei die Komponente (b) ein Dihydronepetalacton umfasst.

3. Zusammensetzung nach Anspruch 1, wobei die Komponente (b) ein Isomer von Dihydronepetalacton umfasst ausgewählt aus der Gruppe bestehend aus
(1S,9S,5R,6R)-5,9-Dimethyl-3-oxabicyclo[4.3.0]nonan-2-on,
(1S,5S,9S,6S)-5,9-Dimethyl-3-oxabicyclo[4.3.0]nonan-2-on,
(1S,9S,6S,SR)-5,9-Dimethyl-3-oxabicyclo[4.3.0]nonan-2-on,
(9S,5S,1R,6R)-5,9-Dimethyl-3-oxabicyclo[4.3.0]nonan-2-on und
(9S,1R,5R,6R)-5,9-Dimethyl-3-oxabicyclo[4.3.0]nonan-2-on und Mischungen derselben.

4. Zusammensetzung nach Anspruch 1, wobei die Komponente (b) ein Derivat eines Dihydronepetalactons umfasst, das durch folgende strukturelle Formel beschrieben ist 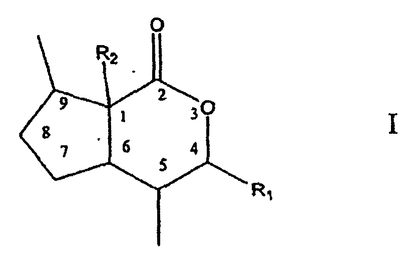 wobei R₁ Wasserstoff, C₁-C₂₀-Alkyl oder C₆-C₂₀-Aryl ist und R₂ Wasserstoff oder C₁-C₂₀-Alkyl ist.

5. Zusammensetzung nach Anspruch 1, wobei die Komponente (b) ein Nepetalactam umfasst.

6. Zusammensetzung nach Anspruch 1, wobei die Komponente (b) ein Dihydronepetalactam umfasst.

7. Zusammensetzung nach Anspruch 1, wobei der Ton aus der Gruppe ausgewählt ist bestehend aus Smektit, Kaolin, Muskovit, Vermiculit, Phlogopit, Xanthophyllit und Chrysotil und Mischungen derselben.

8. Zusammensetzung nach Anspruch 1, des Weiteren ein kosmetisches Hilfsmittel umfassend.

9. Zusammensetzung nach Anspruch 1, als Flüssigkeit, Schaum, Pulver, Halbfeststoff oder Feststoff formuliert.

10. Methode zum Abweisen einer oder mehrerer Zecken und/oder Insekten umfassend das Aussetzen der Zecke(n) und/oder des Insekts bzw. der Insekten einer Zusammensetzung nach Anspruch 1.

## Revendications

1. Composition comprenant (a) une argile ayant une structure stratifiée avec des interstices, et (b) un constituant choisi dans le groupe constitué par une dihydronépétalactone, un dérivé d'une dihydronépétalactone, un népétalactame, un dihydronépétalactame, un népétalactame N-substitué, un dihydronépétalactame N-substitué, et des mélanges de ceux-ci.

2. Composition selon la revendication 1, dans laquelle le constituant (b) comprend une dihydronépétalactone.

3. Composition selon la revendication 1, dans laquelle le constituant (b) comprend un isomère de dihydronépétalactone choisi dans le groupe constitué par
la (1S,9S,SR,6R)-5,9-diméthyl-3-oxabicyclo[4.3.0]nonan-2-one,
la (1S,5S,9S,6S)-5,9-diméthyl-3-oxabicyclo[4.3.0]nonan-2-one,
la (1S,9S,6S,SR)-5,9-diméthyl-3-oxabicyclo[4.3.0]nonan-2-one,
la (9S,5S,1R,6R)-5,9-diméthyl-3-oxabicyclo[4.3.0]nonan-2-one, et
la (9S,1R,SR,6R)-5,9-diméthyl-3-oxabicyclo[4.3.0]nonan-2-one,
et des mélanges de celles-ci.

4. Composition selon la revendication 1, dans laquelle le constituant (b) comprend un dérivé d'une dihydronépétalactone représenté par la formule structurale suivante 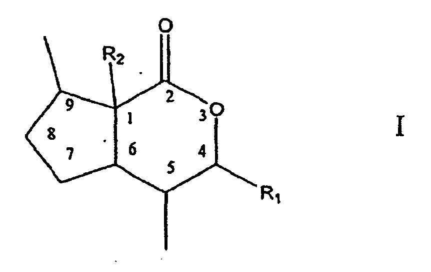 dans laquelle R₁ est de l'hydrogène, un alkyle en C₁~C₂₀ ou un aryle en C₆∼C₂₀, et R₂ est de l'hydrogène ou un alkyle en C₁~C₂₀.

5. Composition selon la revendication 1, dans laquelle le constituant (b) comprend un népétalactame.

6. Composition selon la revendication 1, dans laquelle le constituant (b) comprend un dihydronépétalactame.

7. Composition selon la revendication 1, dans laquelle l'argile est choisie dans le groupe constitué par la smectite, le kaolin, la muscovite, la vermiculite, la phlogopite, la xanthophyllite et le chrysotile, et des mélanges de ceux-ci.

8. Composition selon la revendication 1, comprenant en outre un adjuvant cosmétique.

9. Composition selon la revendication 1, formulée sous la forme d'un liquide, d'une mousse, d'une poudre, d'un semi-solide ou d'un solide.

10. Procédé pour repousser une ou plusieurs tiques et/ou insectes, comprenant l'exposition de la (des) tique(s) et/ou du (des) insecte(s) à une composition selon la revendication 1.
